# EUROPEAN PATENT APPLICATION

(11) **EP 4 663 609 A1**
(43) Date of publication of application: **17.12.2025**
(21) Application number: 25156246.8
(22) Date of filing: 06.02.2025
(51) Int. Cl.: C02F 1/00, C02F 1/28, C02F 1/44

(54) **WATER FILTRATION DEVICE**

(30) Priority: 24.12.2024 TW 113214191 U
(71) Applicant: Caware Filtering Corporation, Kaohsiung City (TW)
(72) Inventor: CHANG, Min-Hua, Kaohsiung City (TW); CHANG, Chia Hao, Kaohsiung City (TW)
(74) Representative: Becker, Eberhard

(57) **Abstract**

Provided is a water filtration device which comprises a filter element (13), the filter element (13) comprises a filter cartridge (132), and the filter cartridge (132) comprises a filter body (1320), a waterproof wall (1321) and a water-blocking body (1322); wherein the filter body (1320) comprises multiple bent porous hollow tubes (1324), each of which has a bent end (1325) and an opening end (1326) opposite to each other with the opening end (1326) set toward the outlet tube (133), the waterproof wall (1321) surrounds the filter body (1320), the water-blocking body (1322) surrounds and fixes the opening ends (1326) of the bent porous hollow tubes (1324), and the water-blocking body (1322) has an outer peripheral surface connected to the waterproof wall (1321). The water filtration device of the present invention has excellent heavy metal and per- and poly-fluoroalkyl substances reduction capability, and a prolonged service life.

## Description

The present invention relates to a filtration device, especially a water filtration device.

Environmental pollution incidents resulting from industrial development have occurred frequently in recent years and these incidents induce health problems such as allergies. Therefore, people increasingly pay attention to environmental and health issues. In particular, quality control of water for daily use has become extremely important after frequently reported cases of old water pipes and leakage incidents.

Further, people drink water to facilitate removing toxic substances and metabolic wastes in the bodies, and the recommended daily intake for an adult weighing 60 kilograms (kg) is 1.8 liters to 2.48 liters. If the drinking water is contaminated with toxic pollutants such as heavy metal elements and per- and poly-fluoroalkyl substances (PFAS), personal health can be seriously damaged over time. Therefore, clean drinking water is crucial to personal health.

Although various water filtration devices are available in the market, the filter elements of these water filtration devices are consumables and a considerable cost may occur due to long-term use. Therefore, filter elements with both effective filtration functions and prolonged service life still need to be developed.

To solve the aforementioned problems, the present invention provides a water filtration device, comprising:
a case, having a water inlet and a water outlet on top thereof, wherein
the water inlet is in fluid communication with an accommodation space in the case,
the accommodation space accommodates a filter element, and
the filter element comprises a filter wall, a filter rod, a filter cartridge and an outlet tube, wherein
   the filter wall surrounds the filter rod and the filter cartridge, the filter rod is in fluid communication with the filter cartridge, the filter cartridge is in fluid communication with the outlet tube, and the outlet tube is in fluid communication with the water outlet of the case;
   the filter wall comprises stacked multiple porous sheets or a pleated porous membrane,
   the filter rod comprises activated carbon, and
   the filter cartridge comprises a filter body, a waterproof wall and a water-blocking body; wherein
   the filter body comprises multiple bent porous hollow tubes, each of the bent porous hollow tubes has a bent end and an opening end opposite to each other with the opening end set toward the outlet tube,
   the waterproof wall surrounds the filter body, and
   the water-blocking body surrounds and fixes the opening ends of the bent porous hollow tubes, and the water-blocking body has an outer peripheral surface connected to the waterproof wall.

In the water filtration device of the present invention, first, the water inlet and the water outlet are disposed on the top of the case to extend the filtration path and prevent impurities from accumulating in the water inlet, thereby prolonging the service life of the water filtration device of the present invention. Second, the water filtration device of the present invention uses stacked multiple porous sheets or a pleated porous membrane as the filter wall of the filter element for coarse filtration, which can greatly increase the filtration area and filtration efficiency, and greatly reduce the risk of mud and sand accumulation to prevent the blocking of the filter wall and water inflow decrease, thereby prolonging the service life of the water filtration device of the present invention. Third, the activated carbon for adsorbing organic pollutants is in a form of a filter rod to significantly increase the filtration area and filtration efficiency, thereby prolonging the service life of the water filtration device of the present invention. Fourth, the water filtration device of the present invention uses multiple bent porous hollow tubes as a filter body to significantly increase the filtration area and filtration efficiency. Further, both the waterproof wall and the water-blocking body ensure that the direction of water flow sequentially passes through the wall of the porous hollow tubes, the opening at the opening ends of the porous hollow tubes, and then the outlet tube to screen out bacteria. More importantly, after long term use, the aggregated particles of impurities such as heavy metal precipitates and organic pollutants will accumulate in the filter rod. When the pores in the filter rod are partially damaged, the aggregated particles of impurities will dislodge and pass through the filter rod, and are further screened out by the filter body, i.e., the bent porous hollow tubes, to maintain the filtration effect and greatly prolong the service life of the water filtration device of the present invention.

In one embodiment, the case surrounds the accommodation space.

In one embodiment, the opening ends of the bent porous hollow tubes are arranged in a spiral to increase the tightness of the bent porous hollow tubes against each other.

In one embodiment, the porous hollow tubes are hollow fiber membranes (HFMs), which is a semi-permeable membrane in a form of a hollow fiber.

Preferably, the bent end is in a form of a U or V. In other words, each of the porous hollow tubes originally has two openings opposite to each other, and the two openings both face toward the outlet tube after the porous hollow tube is bent at about 180 degrees.

In one embodiment, the bent porous hollow tubes are arranged in a form of bundles alongside each other. Preferably, the bent porous hollow tubes are bound or tied up into the bundles. More preferably, the bundles lean, abut or rest against each other. Further preferably, the site of the binding or tying is adjacent to the bent end.

In one embodiment, the bundles are arranged and connected side by side. In other words, the bundles are parallel to each other and the bundles are connected to one another. Preferably, the bent ends of the bundles are connected one by one and side by side by braiding. In other words, the bundles are connected side by side in order by braiding to obtain a form resembling bamboo slips, wherein only the bent ends of the bundle are connected by braiding, that is, the opening ends of the bundles are not connected by braiding.

In one embodiment, the filter body further comprises an axis column, and the opening ends and/or the bent ends of the bent porous hollow tubes are arranged surrounding the axis column. Preferably, the opening ends and/or the bent ends spirally surround the axis column.

In one embodiment, the bent ends of the bundles are connected side by side and surround the axis column spirally. In other words, the bundles in the form of bamboo slips spirally surround the axis column to obtain a cylindrical filter body with the axis column, so that the filter body can effectively fill up the internal space of the filter cartridge to increase the number of the porous hollow tubes to increase the filtering area.

In one embodiment, the water-blocking body has a top surface, and the top surface of the water-blocking body is at the same level plane as the openings of the opening ends of the bent porous hollow tubes. In other words, the water-blocking body surrounds the opening ends without blocking their openings.

In one embodiment, the water-blocking body is made of a material comprising a thermosetting resin. Preferably, the thermosetting resin comprises polyurethane (PU).

In one embodiment, the axis column is a funnel. In the present invention, the filter body with the axis column is inverted and placed in a waterproof cup. That is, the opening ends of the bent porous hollow tubes are set towards the bottom of the waterproof cup. A polyurethane glue is poured into the axis column (i.e., a funnel) and flows to the bottom of the cup. The polyurethane glue fills up the bottom of the cup and solidifies to form the water-blocking body. The water-blocking body fixes the relative locations of the opening ends of the bent porous hollow tubes and is fixed in the waterproof cup to obtain a semi-finished product of the filter cartridge. The bottom end of the semi-finished product of the filter cartridge, which comprises the bottom of the waterproof cup, part of the axis column and part of the porous hollow tubes, is cut to re-expose the openings of the opening ends.

In addition, as the vertical height of the polyurethane glue in the axis column (i.e., the funnel) is higher than that of the polyurethane glue in the bottom of the waterproof cup, the cutting action for re-exposing the openings of the opening ends of the porous hollow tubes does not re-expose the opening of the axis column (i.e., the funnel). That is, the opening of the axis column (i.e., the funnel) toward the outlet tube is still blocked by the water-blocking body.

In one embodiment, the filter cartridge comprises a first space and a second space, the first space is between the outlet tube and the second space, and the first space has a diameter smaller than that of the second space to improve the fixation between the waterproof wall and the water-blocking body. Preferably, the water-blocking body is located in the first space, and the bent ends of the bent porous hollow tubes are located in the second space.

In one embodiment, the waterproof wall is made of a material comprising acrylonitrile-butadiene-styrene (ABS), polystyrene (PS) and polycarbonate (PC) or a combination thereof.

In one embodiment, the porous sheets or the pleated porous membrane have an average pore diameter of 1 µm to 5 µm to effectively filter out particles such as sediments of mud or dirt.

In one embodiment, the porous sheets or the pleated porous membrane surround the filter rod and the filter cartridge side by side.

In one embodiment, the porous hollow tube has a tube wall comprising a first material, and the first material comprises polyethylene (PE), polyvinylidene difluoride (PVDF), polyethersulfone (PES) and polysulfone (PS) or a combination thereof.

In one embodiment, the porous hollow tube has a tube wall, and the tube wall is a composite tube wall. Preferably, the composite tube wall comprises a first tube wall and a second tube wall, and the first tube wall surrounds the second tube wall; wherein the first tube wall comprises the first material, and the second tube wall comprises a second material. More preferably, the second material comprises polydiacetylene (PDA) and polyvinyl alcohol (PVA) or a combination thereof.

Preferably, the composite tube wall comprises a first tube wall, a second tube wall and a third tube wall, the first tube wall surrounds the second tube wall, and the second tube wall surrounds the third tube wall; wherein the first tube wall comprises the first material, the second tube wall comprises polydiacetylene, and the third tube wall comprises polyvinyl alcohol.

The present invention uses the composite tube wall to further improve the filtration capacity and mechanical strength of the porous hollow tubes to improve filtration efficiency and prolong service life.

Preferably, the composite tube wall can be obtained by the process of co-extrusion or phase inversion.

In one embodiment, the porous sheets or the pleated porous membrane are made of a material comprising polypropylene (PP), nylon, polytetrafluoroethylene (PTFE), polyethersulfone (PES), polyvinylidene difluoride (PVDF), fiberglass or a combination thereof.

In one embodiment, the porous hollow tube has a wall with an average pore diameter of 0.1 µm or less so as to effectively filter out bacteria or other aggregated particles of impurities. Preferably, the porous hollow tube has a wall with an average pore diameter of 0.01 µm to 0.1 µm.

In one embodiment, the activated carbon is coconut shell activated carbon or carbon black.

In one embodiment, the filter rod further comprises an additive, a functional group or a combination thereof. The present invention further uses additives or modifies activated carbon to add specific functional groups to improve the filtration efficiency.

In one embodiment, the additive comprises a catalyst. Preferably, the catalyst comprises activated alumina, Na₄TiO₄ or a combination thereof.

In one embodiment, based on the total weight of the filter rod, Na₄TiO₄ is present in an amount of 9 weight percent to 15 weight percent. Preferably, based on the total weight of the filter rod, Na₄TiO₄ is present in an amount of 9 weight percent to 12 weight percent.

In one embodiment, the functional group comprises a nitrogen-containing functional group, oxygen-containing functional group or a combination thereof.

In one embodiment, the nitrogen-containing functional group comprises primary amines, secondary amines, imines, cyclic amines or a combination thereof. Preferably, the nitrogen-containing functional group comprises pyridine.

In one embodiment, the oxygen-containing functional group comprises pyrone.

In one embodiment, a connector is provided between the filter rod and the filter cartridge, the connector has a water outlet part and a water inlet tube part opposite to each other, and the water outlet part has a diameter greater than that of the water inlet tube part. Preferably, the water outlet part is in fluid communication with the water inlet tube part.

The structure design that "the water outlet part has a diameter greater than that of the water inlet tube part" can reduce the water pressure in the filter cartridge, thereby effectively preventing the bent porous hollow tubes, which abut against each other, from separating at the site confronting a potential focused water current to avoid reduced filtering function.

In one embodiment, a buffer space is between the water outlet part and the water inlet tube part, and the filter cartridge is outside the buffer space.

The buffer space serves as the buffer space for the water current to effectively maintain the structure that the bent porous hollow tubes abut against each other.

In one embodiment, the water outlet part spaces at intervals with the bent ends of the bent porous hollow tubes, thereby further preventing the bent porous hollow tubes, which abut against each other, from separating at the site confronting a potential focused water current.

In one embodiment, the filter rod has an axis channel, and the water inlet tube part of the connector protrudes into the axis channel of the filter rod.

The structure design that "the water inlet tube part protrudes into the axis channel of the filter rod," i.e., not toward the water outlet part, can effectively avoid a highly focused water current being formed at the water outlet part, and reduces the risk that gaps are formed or increased between the porous hollow tubes.

In summary, the water filtration device of the present invention has the advantages of effectively maintaining the filtration effect and greatly prolonging the service life.

In the drawings:
FIG. 1 shows a stereo view of the appearance of the water filtration device of Example 1 of the present invention.
FIG. 2 shows a schematic cross-section of the water filtration device of Example 1 of the present invention.
FIG. 3 shows an appearance schematic diagram of the filter wall of the water filtration device of Example 1 of the present invention.
FIG. 4 shows a partial schematic cross-section of the filter body of the water filtration device of Example 1 of the present invention.
FIG. 5 shows a partial schematic diagram of a stereo view of the filter body of the water filtration device of Example 1 of the present invention.
FIG. 6 shows a schematic diagram of the porous hollow tubes of the water filtration device of Example 1 of the present invention.
FIG. 7 shows lead reduction test results of the water filtration device of Comparative Example 1 and that of Example 2 of the present invention.

The present invention is further explained through the following embodiments. A person having ordinary skill in the art can easily understand the advantages and efficacy achieved by the present invention. The present invention should not be limited to the contents of the embodiments. A person having ordinary skill in the art can make improvements or modifications which are not departing from the spirit and scope of the present invention to practice or apply the content of the present invention.

### Example 1: water filtration device

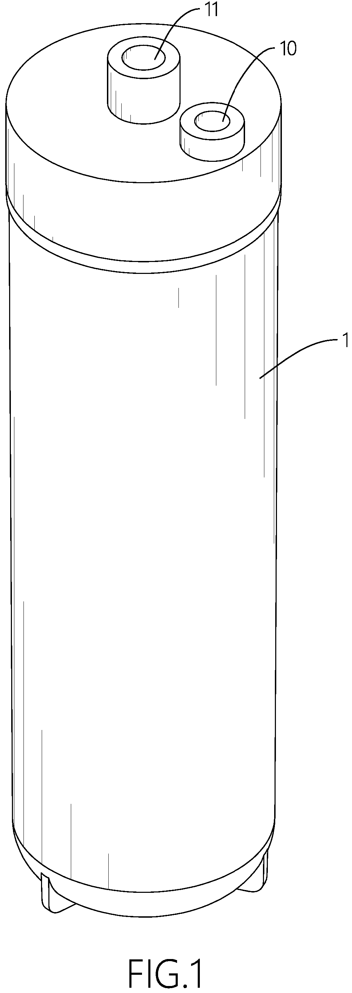

As shown in FIG. 1, the water filtration device of Example 1 comprises a case 1, which has a water inlet 10 and a water outlet 11 on top thereof, wherein the water outlet 11 is at the axis of the water filtration device, and the water inlet 10 deviates from said axis.

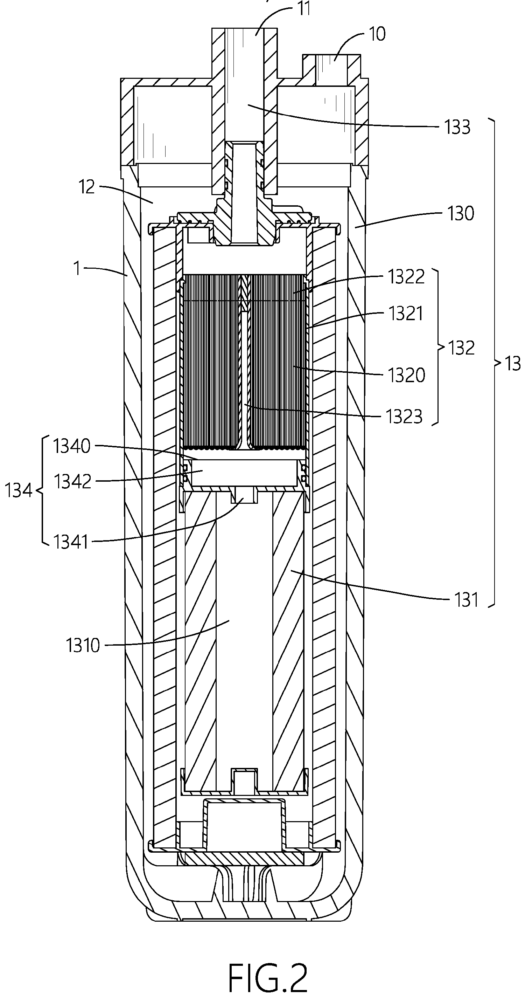

As shown in FIG. 2, the water inlet 10 is in fluid communication with an accommodation space 12 in the case 1; the accommodation space 12 accommodates a filter element 13, the filter element 13 comprises a filter wall 130, a filter rod 131, a filter cartridge 132 and an outlet tube 133, the filter wall 130 surrounds the filter rod 131 and the filter cartridge 132, the filter rod 131 is in fluid communication with the filter cartridge 132, the filter cartridge 132 is in fluid communication with the outlet tube 133, and the outlet tube 133 is in fluid communication with the water outlet 11 of the case 1. Therefore, the direction of water flow sequentially passes through the water inlet 10, the accommodation space 12, the filter wall 130, the filter rod 131, the filter cartridge 132 and the outlet tube 133 and the water outlet 11 to remove impurities.

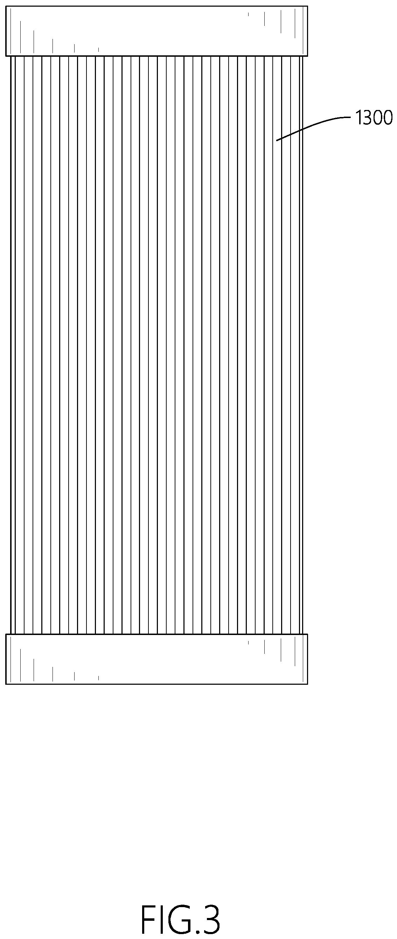

As shown in FIG. 2 and FIG. 3, the filter wall 130 comprises stacked multiple porous sheets 1300, and the porous sheets 1300 are made of polypropylene, the filter rod 131 comprises activated carbon; wherein the porous sheets 1300 have an average pore diameter of 1 µm to 5 µm, and the activated carbon is coconut shell activated carbon.

As shown in FIG. 2, the filter cartridge 132 comprises a filter body 1320, a waterproof wall 1321 and a water-blocking body 1322; wherein the filter body 1320 comprises multiple bent porous hollow tubes (not shown), and the bent porous hollow tubes are arranged surrounding an axis column 1323. Further, the waterproof wall 1321 surrounds the filter body 1320, and the water-blocking body 1322 has an outer peripheral surface connected to the waterproof wall 1321.

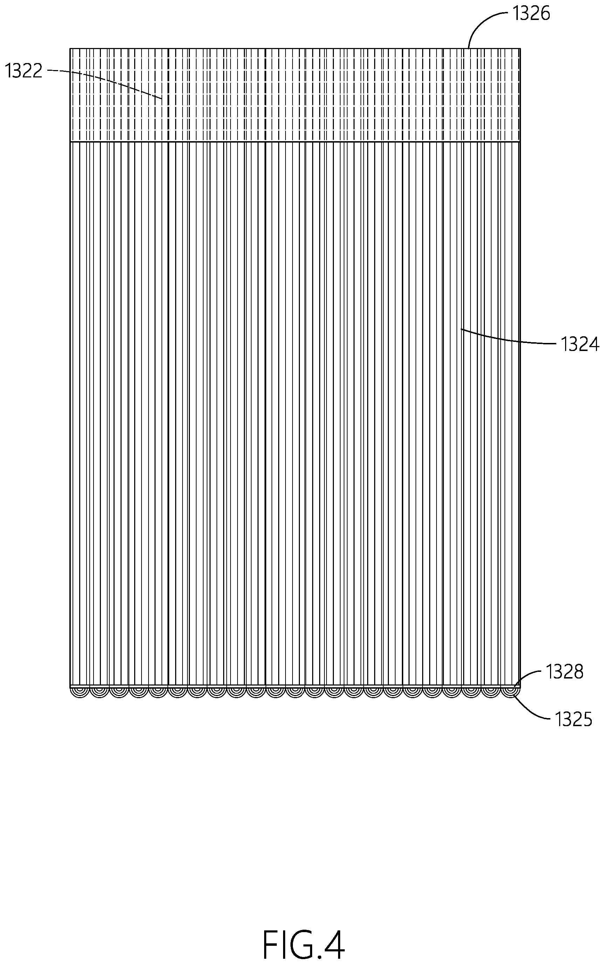

As shown in FIG. 4, each of the bent porous hollow tubes 1324 has a bent end 1325 and an opening end 1326 opposite to each other, the water-blocking body 1322 surrounds and fixes the opening ends 1326 of the bent porous hollow tubes 1324. The opening end 1326 is toward the outlet tube (not shown). Further, the bent porous hollow tubes 1324 are bound or tied up into multiple bundles, and the bundles abut or rest against each other; wherein the site 1328 of the binding or tying is adjacent to the bent end 1325, and the bundles are connected side by side through the connections of the sites 1328 of the binding or tying by braiding.

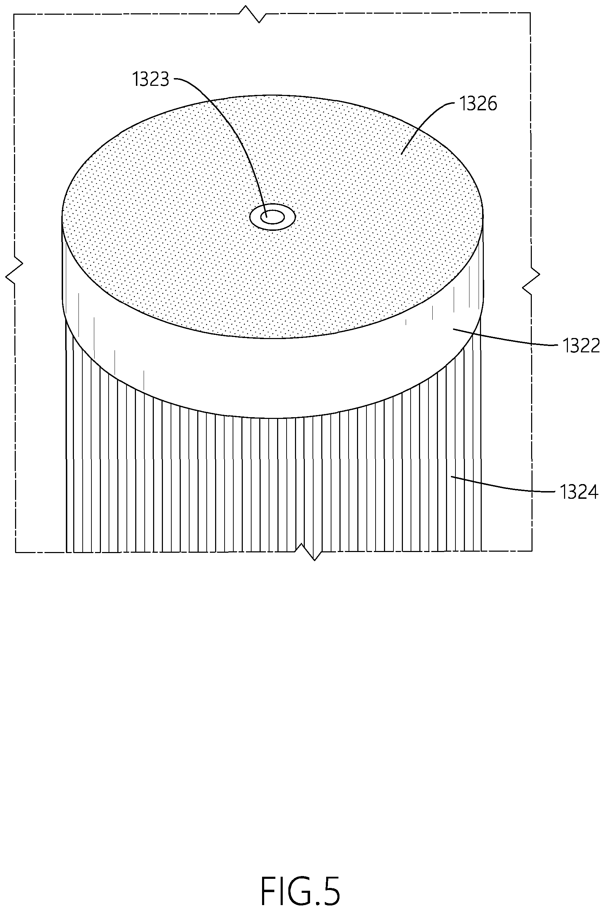

As shown in FIG. 5, the water-blocking body 1322 has a top surface, and the top surface of the water-blocking body 1322 is at the same level plane as the openings of the opening ends 1326 of the bent porous hollow tubes 1324. Further, the water-blocking body 1322 is made of polyurethane, the axis column 1323 is a funnel, wherein the internal channel of the axis column 1323 is blocked by polyurethane, and the water flow cannot penetrate the axis column 1323.

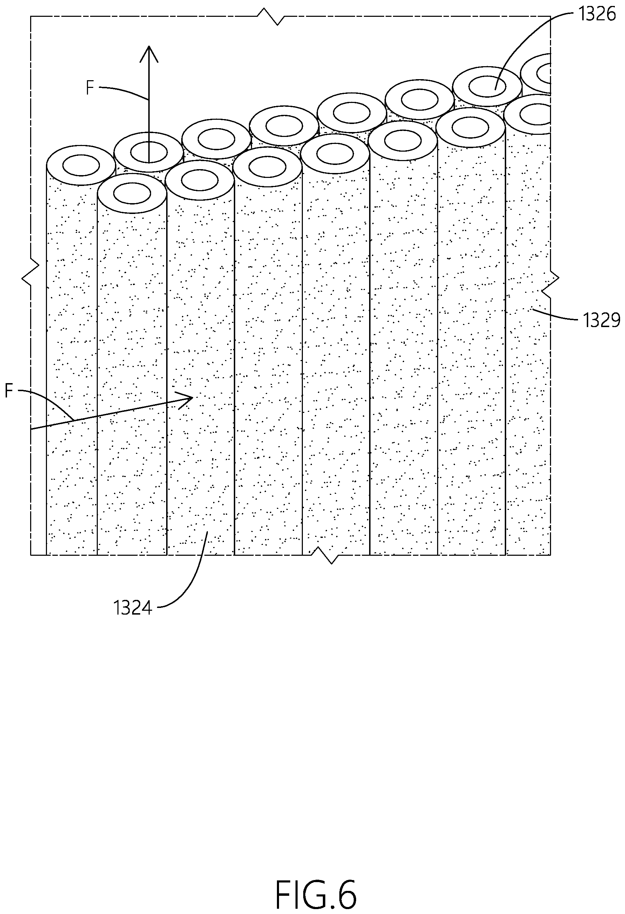

As shown in FIG. 6, a water flow F passes through the pores 1329 of the tube wall of the porous hollow tubes 1324 to enter the porous hollow tubes 1324; wherein the tube wall is made of polyethylene, and the tube wall has an average pore diameter of 0.1 µm or less. The water flow F further passes through the openings of the opening ends 1326 of the porous hollow tubes 1324 to enter the outlet tube (not shown), so as to screen out bacteria and the avalanched aggregated particles of impurities from the filter rod (not shown) for greatly prolonging the service life of the water filtration device of the present invention.

Finally, as shown in FIG. 2, a connector 134 is provided between the filter rod 131 and the filter cartridge 132, the connector 134 has a water outlet part 1340 and a water inlet tube part 1341 opposite to each other, and the water outlet part 1340 has a diameter greater than that of the water inlet tube part 1341; wherein a buffer space 1342 is between the water outlet part 1340 and the water inlet tube part 1341, and the filter cartridge 132 is outside the buffer space 1342. The filter rod 131 has an axis channel 1310, and the water inlet tube part 1341 of the connector 134 protrudes into the axis channel 1310 of the filter rod 131, thereby effectively preventing the bent porous hollow tubes, which abut against each other, from separating at the site confronting a potential focused water current to avoid reduced filtering function.

### Example 2: water filtration device

The differences of the water filtration devices between Example 1 and Example 2 are as follows: the filter rod of Example 2 further comprised a catalyst in addition to activated carbon, wherein the catalyst was Na₄TiO₄, and based on the total weight of the filter rod, Na₄TiO₄ was present in an amount of 10 weight percent, thereby promoting the precipitation of heavy metal ions in water on the surface of the catalyst.

### Example 3: water filtration device

The differences of the water filtration devices between Example 1 and Example 3 are as follows: the filter rod of Example 3 comprised activated carbon with nitrogen-containing functional groups, wherein the main nitrogen-containing functional group was the pyridine group to adsorb organic pollutants in water. The activated carbon with nitrogen-containing functional groups was obtained by the known technology published in the article by Yue Zhi et al., "Surface modification of activated carbon for enhanced adsorption of perfluoroalkyl acids from aqueous solutions," Chemosphere 144 (2016) 1224-1232, which comprises the step: heating activated carbon in ammonia gas with a purity greater than 99.99% and a flow rate of 50 mL/min at 700°C for 1 hour.

### Test 1: Lead reduction test

This test was carried out to confirm whether the addition of the filter cartridge of the present invention to a water filtration device can prolong service life. The difference of the water filtration devices between Example 2 (E2) and Comparative Example 1 (CE1) was that CE1 did not have the filter cartridge of the present invention. Further, both E2 and CE1 had a filter rod with an outer diameter of 45 millimeters (mm), an inner diameter of 21 mm, and a length of 159 mm.

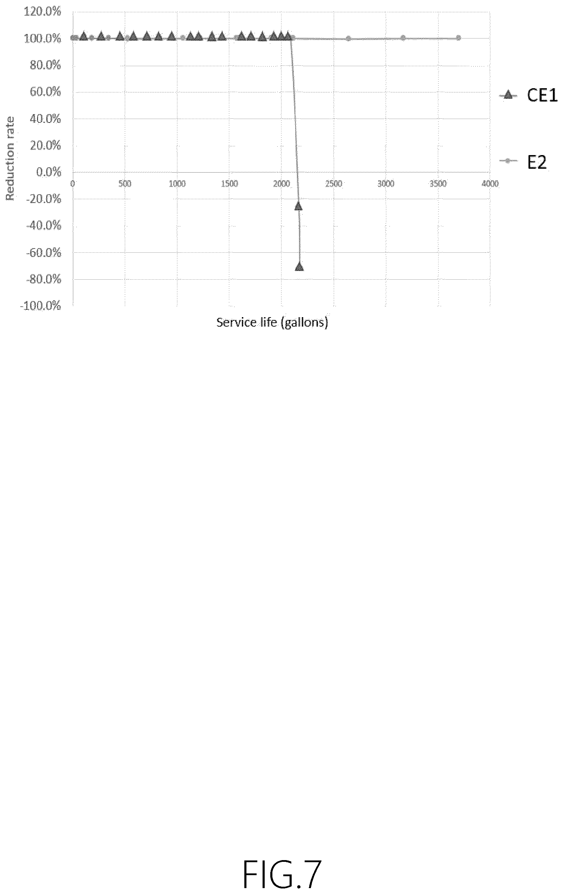

Test method: A lead-comprising solution with a lead ion concentration of 0.15 mg/L (150 ppb) was firstly prepared. The water filtration devices of E2 and CE1 were installed in a test platform respectively to control and measure (1) the influent volume of the lead-comprising solution by the flow meter and the pressure gauge on the water inlet end of the test platform, and (2) the effluent volume of the lead-comprising solution by the flow meter and the pressure gauge on the water outlet end of the test platform. The filtered test samples were respectively taken once approximately every 100 gallons (gal) of effluent volume flowing out, and added with 10% nitric acid aqueous solution to obtain the final test samples with a pH value of 3 to 3.5. All final test samples were measured with a Spectroquant^{®} Prove 600 spectrophotometer to determine the lead ion concentrations thereof, and the results are shown in FIG. 7.

Results: According to FIG. 7, when the effluent volume from the water filtration device of E2 reached 3,700 gallons, no lead ion was detected in the final test samples, which means that the lead ion concentration was less than 0.005 mg/L (5 ppb). Therefore, the lead ion reduction rate of E2 remained at 100% after an effluent volume of 3,700 gallons. In comparison, when the effluent volume from the water filtration device of CE1 reached 2,200 gallons, a lead ion concentration higher than 0.15 mg/L was detected, and the lead ion reduction rate showed a negative value. It was found that the lead ions previously adsorbed in the filter rod in the water filtration device of CE1 were suddenly released in a great amount when the effluent volume reached 2,200 gallons, so the service life of CE1 was approximately 2,000 gallons. As the service life of E2 is 3700 gallons/2000 gallons=1.85 times in comparison with that of CE1, the filter cartridge comprising the bent porous hollow tubes of the present invention can effectively intercept the aggregated particles of impurities suddenly released in a great amount from the filter rod to maintain the filtration effect and greatly prolong the service life of the water filtration device of the present invention.

### Test 2: Lead reduction certification

Both Examples 2 (Example 2A (E2A) and Example 2B (E2B) of the water filtration device of the present invention) were certified according to the NSF/ANSI 53-2021 (Drinking Water Treatment Units, Health Effects) standard. The characteristics of the lead-comprising solution are shown in Table 1, the test parameters set for the water filtration device are shown in Table 2, and the lead reduction test results are shown in Table 3.

**Table 1: the characteristics of the lead-comprising solution**

| Item | Content |
|---|---|
| Concentration of lead ions | 0.12 mg/L (120 ppb) to 0.18 mg/L (180 ppb). |
| pH | 6.5±0.25 |
| Temperature | 20±2.5°C |
| Hardness | 10 mg/L to 30 mg/L |
| Alkalinity | 10 mg/L to 30 mg/L |
| Polyphosphate (P) | <0.5 mg/L |
| Total dissolved solids (TDS) | <100 mg/L |
| Turbidity | <1 Nephelometric Turbidity Unit (NTU) |

**Table 2: the test parameters set for the water filtration device**

| Item | Content |
|---|---|
| Unit Volume | The water filtration device had a volume of 800 ml |
| Cycle | A 30-second cycle was set, in which the test system was turned on for 30 seconds and off for 30 seconds (the cycle ratio was 50/50). The water filtration device was tested for at least 8 hours within 24 hours, and then rested for at least 8 hours. |
| Rated Capacity | 1057 gallons (100%). Without using the performance indication device (PID), the test volume for this test needed to reach at least 2114 gallons (200%). |
| Conditioning | Units were flushed with 2 liters of distilled water |
| Flowrate | Flowrate was set at 0.53 gpm. |
| Prefilter | No |

**Table 3: Lead reduction test results**

| Sample Point | Influent Lead Concentration (ppb) | Effluent Sample Concentration (ppb) | | Flowrate (gpm) | |
|---|---|---|---|---|---|
| | | E2A | E2B | E2A | E2B |
| 10UV | 143.6 | 0.372 | 0.156 | 0.52 | 0.52 |
| 529 gal | 139.8 | 0.282 | 0.2 | 0.54 | 0.54 |
| 1057 gal | 129.1 | <RL | <RL | 0.54 | 0.54 |
| 1586 gal | 142.9 | <RL | <RL | 0.52 | 0.52 |
| 1903 gal | 126.3 | <RL | <RL | 0.54 | 0.54 |
| 2114 gal | 143.5 | <RL | <RL | 0.56 | 0.54 |
| 2643 gal | 131.6 | 0.456 | 0.426 | 0.54 | 0.54 |
| 3171 gal | 149.5 | <RL | <RL | 0.52 | 0.54 |
| 3700 gal | 152.1 | <RL | <RL | 0.54 | 0.54 |
| N/A | Average: 140 | N/A | N/A | N/A | N/A |

| | | | | | |
|---|---|---|---|---|---|
| Notes: UV indicates unit volume (UV). RL indicates Reporting limit (RL). The RL for lead in this test is 0.1 ppb. | | | | | |

According to Table 3, the water filtration device of E2A and E2B of the present invention was tested. Even when an effluent volume of 3700 gallons was reached, i.e., more than twice the rated capacity, the device still effectively reduced lead ion concentration and maintained a stable flowrate. Therefore, the water filtration device of E2A and E2B of the present invention had excellent lead reduction capability and was certified to comply with the NSF/ANSI 53-2021 standard.

### Test 3: PFAS reduction certification

Both Examples 3 (Example 3A (E3A) and Example 3B (E3B) of the water filtration device of the present invention) were certified according to the NSF/ANSI Standard 53 -2022 PFAS Reduction Testing. The characteristics of the influent solution are shown in Table 4, the test parameters set for the water filtration device are shown in Table 5, and the PFAS reduction results are shown in Tables 6 to 14.

**Table 4: the characteristics of the influent solution**

| Item | | Content |
|---|---|---|
| pH | | 7.47 to 7.54 |
| Temperature | | 18.1°C to 18.6°C |
| Turbidity | | 0.4 NTU to 0.42 NTU |
| Total organic carbon (TOC) | | 1.5 mg/L to 1.7 mg/L |
| Total dissolved solids (TDS) | | 216 mg/L to229 mg/L |
| Influent flowrate | E3A | 0.32 gpm in average |
| | E3B | 0.33 gpm in average |
| Influent pressure | E3A | 60 psi to 63 psi |
| | E3B | 60 psi to 63 psi |

**Table 5: the test parameters set for the water filtration device**

| Item | Content |
|---|---|
| Unit Volume | The water filtration device had a volume of 800 ml |
| Cycle | A 30-second cycle was set, in which the test system was turned on for 30 seconds and off for 30 seconds (the cycle ratio was 50/50). The water filtration device was tested for at least 8 hours within 24 hours, and then rested for at least 8 hours. |
| Rated Capacity | 1500 gallons (100%). With the performance indication device (PID), the test volume for this test needed to reach at least 1800 gallons (120%). |
| Conditioning | Units were flushed with 2 liters of distilled water |
| Flowrate | Flowrate was set at 0.5 gpm. |

**Table 6: Perfluorooctanoic acid (PFOA) reduction result**

| Sample Point | Accumulated effluent volume | Influent PFOA Concentration (µg/L) | | Effluent PFOA Concentration (µg/L) | |
|---|---|---|---|---|---|
| | | E3A | E3B | E3A | E3B |
| 10UV | 10UV | 0.500 | 0.500 | 0.004 | 0.005 |
| 25% | 375 gal | 0.494 | 0.494 | 0.003 | 0.002 |
| 50% | 750 gal | 0.513 | 0.513 | 0.001 | 0.001 |
| 75% | 1125 gal | 0.493 | 0.493 | 0.001 | 0.002 |
| 100% | 1500 gal | 0.492 | 0.492 | 0.001 | 0.001 |
| 120% | 1800 gal | 0.510 | 0.510 | 0.001 | 0.001 |

**Table 7: Perfluorooctanesulfonic acid (PFOS) reduction result**

| Sample Point | Accumulated effluent volume | Influent PFOS Concentration (µg/L) | | Effluent PFOS Concentration (µg/L) | |
|---|---|---|---|---|---|
| | | E3A | E3B | E3A | E3B |
| 10UV | 10UV | 1.050 | 1.050 | 0.001 | 0.002 |
| 25% | 375 gal | 1.000 | 1.000 | 0.002 | 0.003 |
| 50% | 750 gal | 0.922 | 0.922 | 0.004 | 0.003 |
| 75% | 1125 gal | 0.987 | 0.987 | 0.001 | 0.002 |
| 100% | 1500 gal | 0.942 | 0.942 | 0.002 | 0.001 |
| 120% | 1800 gal | 0.964 | 0.964 | 0.001 | 0.001 |

**Table 8: PFOA and PFOS reduction result**

| Sample Point | Accumulated effluent volume | Influent PFOA and PFOS Concentration (µg/L) | | Effluent PFOA and PFOS Concentration (µg/L) | |
|---|---|---|---|---|---|
| | | E3A | E3B | E3A | E3B |
| 10UV | 10UV | 1.550 | 1.550 | 0.005 | 0.007 |
| 25% | 375 gal | 1.494 | 1.494 | 0.005 | 0.005 |
| 50% | 750 gal | 1.435 | 1.435 | 0.005 | 0.004 |
| 75% | 1125 gal | 1.480 | 1.480 | 0.002 | 0.004 |
| 100% | 1500 gal | 1.434 | 1.434 | 0.003 | 0.002 |
| 120% | 1800 gal | 1.474 | 1.474 | 0.002 | 0.002 |

**Table 9: Perfluorononanoic acid (PFNA) reduction result**

| Sample Point | Accumulated effluent volume | Influent PFNA Concentration (µg/L) | | Effluent PFNA Concentration (µg/L) | |
|---|---|---|---|---|---|
| | | E3A | E3B | E3A | E3B |
| 10UV | 10UV | 0.047 | 0.047 | <0.001 | <0.001 |
| 25% | 375 gal | 0.052 | 0.052 | <0.001 | <0.001 |
| 50% | 750 gal | 0.042 | 0.042 | <0.001 | <0.001 |
| 75% | 1125 gal | 0.048 | 0.048 | <0.001 | <0.001 |
| 100% | 1500 gal | 0.052 | 0.052 | 0.001 | <0.001 |
| 120% | 1800 gal | 0.052 | 0.052 | <0.001 | <0.001 |

**Table 10: Perfluorohexanesulfonic acid (PFHxS) reduction result**

| Sample Point | Accumulated effluent volume | Influent PFHxS Concentration (µg/L) | | Effluent PFHxS Concentration (µg/L) | |
|---|---|---|---|---|---|
| | | E3A | E3B | E3A | E3B |
| 10UV | 10UV | 0.296 | 0.296 | <0.001 | <0.001 |
| 25% | 375 gal | 0.308 | 0.308 | 0.001 | 0.001 |
| 50% | 750 gal | 0.256 | 0.256 | 0.001 | 0.002 |
| 75% | 1125 gal | 0.292 | 0.292 | <0.001 | <0.001 |
| 100% | 1500 gal | 0.297 | 0.297 | 0.002 | 0.003 |
| 120% | 1800 gal | 0.270 | 0.270 | 0.001 | 0.001 |

**Table 11: Perfluorinated carboxylic acid (PFHpA) reduction result**

| Sample Point | Accumulated effluent volume | Influent PFHpA Concentration (µg/L) | | Effluent PFHpA Concentration (µg/L) | |
|---|---|---|---|---|---|
| | | E3A | E3B | E3A | E3B |
| 10UV | 10UV | 0.037 | 0.037 | <0.001 | <0.001 |
| 25% | 375 gal | 0.041 | 0.041 | <0.001 | <0.001 |
| 50% | 750 gal | 0.039 | 0.039 | <0.001 | <0.001 |
| 75% | 1125 gal | 0.038 | 0.038 | <0.001 | <0.001 |
| 100% | 1500 gal | 0.037 | 0.037 | 0.001 | 0.003 |
| 120% | 1800 gal | 0.041 | 0.041 | 0.001 | 0.001 |

**Table 12: Perfluorobutane sulfonic acid (PFBS) reduction result**

| Sample Point | Accumulated effluent volume | Influent PFBS Concentration (µg/L) | | Effluent PFBS Concentration (µg/L) | |
|---|---|---|---|---|---|
| | | E3A | E3B | E3A | E3B |
| 10UV | 10UV | 0.240 | 0.240 | <0.001 | <0.001 |
| 25% | 375 gal | 0.284 | 0.284 | <0.001 | <0.001 |
| 50% | 750 gal | 0.232 | 0.232 | <0.001 | <0.001 |
| 75% | 1125 gal | 0.284 | 0.284 | 0.001 | 0.001 |
| 100% | 1500 gal | 0.267 | 0.267 | <0.001 | <0.001 |
| 120% | 1800 gal | 0.249 | 0.249 | 0.003 | 0.004 |

**Table 13: Perfluorodecanoic acid (PFDA) reduction result**

| Sample Point | Accumulated effluent volume | Influent PFDA Concentration (µg/L) | | Effluent PFDA Concentration (µg/L) | |
|---|---|---|---|---|---|
| | | E3A | E3B | E3A | E3B |
| 10UV | 10UV | 0.009 | 0.009 | <0.001 | <0.001 |
| 25% | 375 gal | 0.008 | 0.008 | <0.001 | <0.001 |
| 50% | 750 gal | 0.007 | 0.007 | <0.001 | <0.001 |
| 75% | 1125 gal | 0.008 | 0.008 | <0.001 | <0.001 |
| 100% | 1500 gal | 0.009 | 0.009 | 0.004 | 0.007 |
| 120% | 1800 gal | 0.010 | 0.010 | 0.001 | 0.001 |

**Table 14: Total per- and poly-fluoroalkyl substances (PFAS) reduction result**

| Sample Point | Accumulated effluent volume | Influent Total PFAS Concentration (µg/L) | | Effluent Total PFAS Concentration (µg/L) | |
|---|---|---|---|---|---|
| | | E3A | E3B | E3A | E3B |
| 10UV | 10UV | 2.179 | 2.179 | 0.005 | 0.007 |
| 25% | 375 gal | 2.187 | 2.187 | 0.006 | 0.006 |
| 50% | 750 gal | 2.011 | 2.011 | 0.006 | 0.006 |
| 75% | 1125 gal | 2.150 | 2.150 | 0.003 | 0.005 |
| 100% | 1500 gal | 2.096 | 2.096 | 0.011 | 0.015 |
| 120% | 1800 gal | 2.096 | 2.096 | 0.008 | 0.009 |

According to Tables 6 to 14, the water filtration device of Example 3 of the present invention can reduce total per- and poly-fluoroalkyl substances (PFAS), which comprised Perfluorooctanoic acid (PFOA), Perfluorooctanesulfonic acid (PFOS), Perfluorononanoic acid (PFNA), Perfluorohexanesulfonic acid (PFHxS), Perfluorinated carboxylic acid (PFHpA), Perfluorobutane sulfonic acid (PFBS), and Perfluorodecanoic acid (PFDA). Therefore, the water filtration device of E3A and E3B of the present invention had excellent organic pollutants reduction capability and was certified to comply with the NSF/ANSI Standard 53 -2022 PFAS Reduction Testing.

In summary, the water filtration device of the present invention has excellent lead and per- and polyfluoroalkyl substances (PFAS) reduction capability, and a prolonged service life.

## Claims

1. A water filtration device, **characterized by** comprising:
a case (1), having a water inlet (10) and a water outlet (11) on top thereof, wherein
the water inlet (10) is in fluid communication with an accommodation space (12) in the case (1),
the accommodation space (12) accommodates a filter element (13), and
the filter element (13) comprises a filter wall (130), a filter rod (131), a filter cartridge (132) and an outlet tube (133), wherein
the filter wall (130) surrounds the filter rod (131) and the filter cartridge (132), the filter rod (131) is in fluid communication with the filter cartridge (132), the filter cartridge (132) is in fluid communication with the outlet tube (133), and the outlet tube (133) is in fluid communication with the water outlet (11) of the case (1);
the filter wall (130) comprises stacked multiple porous sheets (1300) or a pleated porous membrane,
the filter rod (131) comprises activated carbon, and
the filter cartridge (132) comprises a filter body (1320), a waterproof wall (1321) and a water-blocking body (1322); wherein
the filter body (1320) comprises multiple bent porous hollow tubes (1324), each of the bent porous hollow tubes (1324) has a bent end (1325) and an opening end (1326) opposite to each other with the opening end (1326) set toward the outlet tube (133),
the waterproof wall (1321) surrounds the filter body (1320), and
the water-blocking body (1322) surrounds and fixes the opening ends (1326) of the bent porous hollow tubes (1324), and the water-blocking body (1322) has an outer peripheral surface connected to the waterproof wall (1321).

2. The water filtration device as claimed in Claim 1, wherein the porous sheets (1300) or the pleated porous membrane have an average pore diameter of 1 µm to 5 µm, and the porous hollow tube (1324) has a wall with an average pore diameter of 0.1 µm or less.

3. The water filtration device as claimed in Claim 1 or 2, wherein the bent porous hollow tubes (1324) are bound or tied up into bundles leaning against each other.

4. The water filtration device as claimed in any one of Claims 1 to 3, wherein the bent porous hollow tubes (1324) are bound or tied up into the bundles, and a site (1328) of the binding or tying is adjacent to the bent end (1325).

5. The water filtration device as claimed in Claim 3, wherein the bundles are arranged and connected side by side.

6. The water filtration device as claimed in any one of Claims 1 to 5, wherein the filter body (1320) further comprises an axis column (1323), and the opening ends (1326) or the bent ends (1325) of the bent porous hollow tubes (1324) are arranged surrounding the axis column (1323).

7. The water filtration device as claimed in any one of Claims 1 to 6, wherein the water-blocking body (1322) has a top surface, and the top surface of the water-blocking body (1322) is at the same level plane as the openings of the opening ends (1326) of the bent porous hollow tubes (1324).

8. The water filtration device as claimed in any one of Claims 1 to 7, wherein the filter cartridge (132) comprises a first space and a second space, the first space is between the outlet tube (133) and the second space, and the first space has a diameter smaller than that of the second space.

9. The water filtration device as claimed in any one of Claims 1 to 8, wherein the porous sheets (1300) or the pleated porous membrane are made of a material comprising polypropylene, nylon, polytetrafluoroethylene, polyethersulfone, polyvinylidene difluoride, fiberglass or a combination thereof;
the waterproof wall (1321) is made of a material comprising acrylonitrile-butadiene-styrene, polystyrene, polycarbonate or a combination thereof;
the activated carbon is coconut shell activated carbon; and
the porous hollow tube (1324) has a tube wall comprising a first material, and the first material comprises polyethylene, polyvinylidene difluoride, polyethersulfone, polysulfone or a combination thereof.

10. The water filtration device as claimed in any one of Claims 1 to 9, wherein the porous hollow tube (1324) has a tube wall, and the tube wall is a composite tube wall.

11. The water filtration device as claimed in Claim 10, wherein the composite tube wall comprises a first tube wall and a second tube wall, and the first tube wall surrounds the second tube wall; wherein the first tube wall comprises a first material, and the first material comprises polyethylene, polyvinylidene difluoride, polyethersulfone, polysulfone or a combination thereof, and
the second tube wall comprises a second material, and the second material comprises polydiacetylene, polyvinyl alcohol or a combination thereof.

12. The water filtration device as claimed in any one of Claims 1 to 11, wherein the water-blocking body (1322) is made of a material comprising a thermosetting resin, and the thermosetting resin comprises polyurethane.

13. The water filtration device as claimed in any one of Claims 1 to 12, wherein a connector (134) is set between the filter rod (131) and the filter cartridge (132), the connector (134) has a water outlet part (1340) and a water inlet tube part (1341) opposite to each other, and the water outlet part (1340) has a diameter greater than that of the water inlet tube part (1341).

14. The water filtration device as claimed in Claim 13, wherein a buffer space (1342) is provided between the water outlet part (1340) and the water inlet tube part (1341), and the filter cartridge (132) is set outside the buffer space (1342).

15. The water filtration device as claimed in Claim 13, wherein the filter rod (131) has an axis channel (1310), and the water inlet tube part (1341) of the connector (134) protrudes into the axis channel (1310) of the filter rod (131).
